(19) Europäisches Patentamt
European Patent Office
Office européen des brevets

(11) EP 3 301 933 A1

(12) EUROPEAN PATENT APPLICATION

(43) Date of publication:
04.04.2018 Bulletin 2018/14

(51) Int Cl.:
H04N 19/70 (2014.01)    H04N 19/46 (2014.01)
G06T 17/10 (2006.01)    G06T 15/00 (2011.01)

(21) Application number: 16306265.6

(22) Date of filing: 30.09.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Thomson Licensing
92130 Issy-les-Moulineaux (FR)

(72) Inventors:
• LELEANNEC, Fabrice
  35576 Cesson-Sévigné Cedex (FR)
• GALPIN, Franck
  35576 Cesson-Sévigné Cedex (FR)
• RATH, Gagan
  35576 Cesson-Sévigné Cedex (FR)

(74) Representative: Rolland, Sophie
TECHNICOLOR
1-5, rue Jeanne d'Arc
92130 Issy-les-Moulineaux (FR)

(54) **METHODS, DEVICES AND STREAM TO PROVIDE INDICATION OF MAPPING OF OMNIDIRECTIONAL IMAGES**

(57)    Methods, apparatus or systems for encoding and decoding sequence of images using mapping indication of an omnidirectional video into a 2D video are disclosed. The images to encode are omnidirectional images. According to different embodiments, the mapping indication comprises a first item representative of the type of surface used for the mapping belonging to a group comprising at least one of an equirectangular mapping, a cube mapping or a pyramid mapping. The indication is use to drive the encoding, decoding or rendering process.

FIG. 13

**Description**

**1. Technical field**

The present disclosure relates to the domain of encoding immersive videos for example when such immersive videos are processed in a system for virtual reality, augmented reality or augmented virtuality and for instance when displayed in a head mounted display device.

**2. Background**

Recently there has been a growth of available large field-of-view content (up to 360°). Such content is potentially not fully visible by a user watching the content on immersive display devices such as Head Mounted Displays, smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

**3. Summary**

The purpose of the present disclosure is to overcome the problem of providing the decoding system or the rendering system with a set of information that describes properties of the immersive video. The present disclosure relates to signaling syntax and semantics adapted to provide mapping properties of an omnidirectional video into a rectangular two-dimensional frame to the decoding and rendering application.

To that end, a decoding method is disclosed that comprises decoding an image of a video, the video being a 2D video into which an omnidirectional video is mapped; and decoding an indication of the mapping of the omnidirectional video into the 2D video, the indication comprising a first item representative of the type of surface used for the mapping belonging to a group comprising at least one of an equirectangular mapping, a cube mapping or a pyramid mapping. Advantageously, the indication is used in decoding of the video image itself or in the immersive rendering of the decoded image.

According to various characteristics, the indication is encoded as a supplemental enhancement information message, or as a sequence-level header information, or as an image-level header information.

According to a specific embodiment, the indication further comprises a second item representative of the orientation of the mapping surface in the 3D space.

According to another specific embodiment, the indication further comprises a third item representative of the density of the pixel mapped on the surface.

According to another specific embodiment, the indication further comprises a fourth item representative of the layout of the mapping surface into the image.

According to another specific embodiment, the indication further comprises a fifth item representative of a generic mapping comprising for each pixel of the video image to encode, spherical coordinates of the corresponding pixel into the omnidirectional video.

According to another specific embodiment, the indication further comprises a sixth item representative of a generic mapping comprising for each sampled pixel of a sphere into the omnidirectional video, 2D coordinates of the pixel on the video image.

According to another specific embodiment, the indication further comprises a seventh item representative of an intermediate sampling space, of a first generic mapping comprising for each sampled pixel of a sphere into the omnidirectional video, coordinates of the pixel in the intermediate sampling space; and of a second generic mapping comprising for each sampled pixel of in the intermediate space, 2D coordinates of the pixel on the video image.

According to a second aspect, a video encoding method is disclosed that comprises encoding an image of a video, the video being a 2D video into which an omnidirectional video is mapped; and encoding an indication of the mapping of the omnidirectional video into the 2D video, the indication comprising a first item representative of the type of surface used for the mapping belonging to a group comprising at least one of an equirectangular mapping, a cube mapping or a pyramid mapping.

According to a third aspect, a video transmitting method is disclosed that comprises transmitting an encoded image of a video, the video being a 2D video into which an omnidirectional video is mapped; and transmitting an encoded indication of the mapping of the omnidirectional video into the 2D video, the indication comprising a first item representative of the type of surface used for the mapping belonging to a group comprising at least one of an equirectangular mapping, a cube mapping or a pyramid mapping.

According to a fourth aspect, an apparatus is disclosed that comprises a decoder for decoding an image of a video, the video being a 2D video into which an omnidirectional video is mapped; and for decoding an indication of the mapping of the omnidirectional video into the 2D video, the indication comprising a first item representative of the type of surface used for the mapping belonging to a group comprising at least one of an equirectangular mapping, a cube mapping or a pyramid mapping.

According to a fifth aspect, an apparatus is disclosed that comprises a encoder for encoding an image of a video, the video being a 2D video into which an omnidirectional video is mapped; and encoding an indication of the mapping of the omnidirectional video into the 2D video, the indication comprising a first item representative of the type of surface used for the mapping belonging to a group comprising at least one of an equirectangular mapping, a cube mapping or a pyramid mapping.

According to a sixth aspect, an apparatus is disclosed that comprises an interface for transmitting an encoded image of a video, the video being a 2D video into which an omnidirectional video is mapped; and transmitting an encoded indication of the mapping of the omnidirectional video into the 2D video, the indication comprising a first item representative of the type of surface used for the mapping belonging to a group comprising at least one of an equirectangular mapping, a cube mapping or a pyramid mapping.

According to a seventh aspect, a video signal data is disclosed that comprises an encoded image of a video, the video being a 2D video into which an omnidirectional video is mapped; and an encoded an indication of the mapping of the omnidirectional video into the 2D video, the indication comprising a first item representative of the type of surface used for the mapping belonging to a group comprising at least one of an equirectangular mapping, a cube mapping or a pyramid mapping.

According to an eighth aspect, a processor readable medium is disclosed that has stored therein a video signal data that comprises an encoded image of a video, the video being a 2D video into which an omnidirectional video is mapped; and an encoded an indication of the mapping of the omnidirectional video into the 2D video, the indication comprising a first item representative of the type of surface used for the mapping belonging to a group comprising at least one of an equirectangular mapping, a cube mapping or a pyramid mapping.

According to a ninth aspect, a computer program product comprising program code instructions to execute the steps of any of the disclosed methods (decoding, encoding, rendering or transmitting) when this program is executed on a computer is disclosed.

According to a tenth aspect, a non-transitory program storage device is disclosed that is readable by a computer, tangibly embodies a program of instructions executable by the computer to perform any of the disclosed methods (decoding, encoding, rendering or transmitting).

While not explicitly described, the present embodiments and characteristics may be employed in any combination or sub-combination. For example, the present principles is not limited to the described mapping syntax elements and any syntax elements encompassed with the disclosed mapping techniques can be used.

Besides, any characteristic or embodiment described for the decoding method is compatible with the other disclosed methods (decoding, encoding, rendering or transmitting), with a device intended to process the disclosed methods and with a computer-readable storage medium storing program instructions.

### 4. List of figures

The present disclosure will be better understood, and other specific features and advantages will emerge upon reading the following description, the description making reference to the annexed drawings wherein:

- **Figure 1** represents a functional overview of an encoding and decoding system according to an example environment of the embodiments of the disclosure;

- **Figure 2 to 6** represent a first embodiment of a system according to particular embodiments of the present principles;

- **Figures 7 to 9** represent a first embodiment of a system according to others particular embodiments of the present principles;

- **Figures 10 to 12** represent a first embodiment of an immersive video rendering device according to particular embodiments of the present principles;

- **Figure 13** illustrates an example of mapping an omnidirectional video on a frame according to two different mapping functions of the present disclosure;

- **Figure 14** illustrates an example of possible layout of the equirectangular mapping according to the present disclosure;

- **Figure 15** illustrates two examples of possible layout of the faces of a cube mapping according to the present disclosure;

- **Figure 16** illustrates two examples of possible layout of the faces of a pyramidal mapping according to the present disclosure;

- **Figure 17** illustrates the processing of a point in the frame F to the local rendering frame of P in case of a generic mapping;

- **Figure 18** illustrates forward and backward transform between the 2D Cartesian coordinate system of the coded frame F and the Polar coordinates system used to parametrize the sphere S in 3D space according to the present principles;

- **Figure 19** diagrammatically illustrates a method of encoding an image and transmitting an encoded image according to a particular embodiment of the present principles;

- **Figure 20** diagrammatically illustrates a method of decoding an image according to a particular embodiment of the present principles;

- **Figure 21** diagrammatically illustrates a method of rendering an image according to a particular embodiment of the present principles;

- **Figure 22** illustrates a particular embodiment of the data structure of a bit stream 220; and

- **Figure 23** shows a hardware embodiment of an apparatus configured to implement methods described in relation with figures

19, 20 or 21 according to a particular embodiment of the present principles.

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It is understood that subject matter embodiments can be practiced without these specific details.

A large field-of-view content may be, among others, a three-dimension computer graphic imagery scene (3D CGI scene), a point cloud or an immersive video.

Many terms might be used to design such immersive videos such as for example virtual Reality (VR), 360, panoramic, $4\pi$, steradians, immersive, omnidirectional, large field of view.

An immersive video typically refers to a video encoded on a rectangular frame that is a two-dimension array of pixels (i.e. element of color information) like a "regular" video. In many implementations, the following processes may be performed. To be rendered, the frame is, first, mapped on the inner face of a convex volume, also called mapping surface (e.g. a sphere, a cube, a pyramid), and, second, a part of this volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device. There is a lack of taking specificities of immersive videos being coded then decoded into account in rendering methods. For instance, it would be desirable to know how the immersive video has been mapped into a rectangular frame, so as to perform the 2D-to-VR rendering.

Pixels may be encoded according to a mapping function in the frame. The mapping function may depend on the mapping surface. For a same mapping surface, several mapping functions are possible. For example, the faces of a cube may be structured according to different layouts within the frame surface. A sphere may be mapped according to an equirectangular projection or to a gnomonic projection for example. The organization of pixels resulting from the selected projection function modifies or breaks lines continuities, orthonormal local frame, pixel densities and introduces periodicity in time and space. These are typical features that are used to encode and decode videos. There is a lack of taking specificities of immersive videos into account in encoding and decoding methods. Indeed, as immersive videos are 360° videos, a panning, for example, introduces motion and discontinuities that require a large amount of data to be encoded while the content of the scene does not change. As an example, a motion compensation process adapted to such specificities could improve the coding efficiency. Thus taking into account immersive videos specificities that have been exploited at the encoding at the decoding video frames would bring valuable advantages to the decoding method.

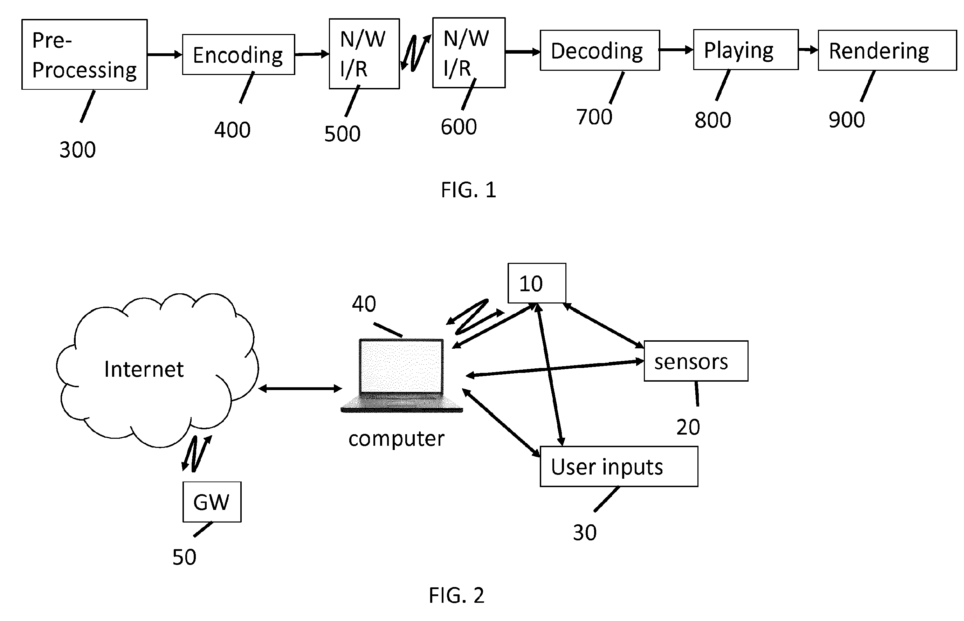

**Figure 1** illustrates a general overview of an encoding and decoding system according to an example embodiment. The system of figure 1 is a functional system. A pre-processing module 300 may prepare the content for encoding by the encoding device 400. The pre-processing module 300 may perform multi-image acquisition, merging of the acquired multiple images in a common space (typically a 3D sphere if we encode the directions), and mapping of the 3D sphere into a 2D frame using, for example, but not limited to, an equirectangular mapping or a cube mapping. The pre-processing module 300 may also accept an omnidirectional video in a particular format (for example, equirectangular) as input, and pre-processes the video to change the mapping into a format more suitable for encoding. Depending on the acquired video data representation, the pre-processing module 300 may perform a mapping space change. The encoding device 400 and the encoding method will be described with respect to other figures of the specification. After being encoded, the data, which may encode immersive video data or 3D CGI encoded data for instance, are sent to a network interface 500, which can be typically implemented in any network interface, for instance present in a gateway. The data are then transmitted through a communication network, such as internet but any other network can be foreseen. Then the data are received via network interface 600. Network interface 600 can be implemented in a gateway, in a television, in a set-top box, in a head mounted display device, in an immersive (projective) wall or in any immersive video rendering device. After reception, the data are sent to a decoding device 700. Decoding function is one of the processing functions described in the following figures 2 to 12. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In a variant, the player 800 is integrated in the rendering device 900.

Several types of systems may be envisioned to perform the decoding, playing and rendering functions of an immersive display device, for example when rendering an immersive video.

A first system, for processing augmented reality, virtual reality, or augmented virtuality content is illustrated in figures 2 to 6. Such a system comprises processing functions, an immersive video rendering device which may be a head-mounted display (HMD), a tablet or a smartphone for example and may comprise sensors. The immersive video rendering device may also comprise additional interface modules between the display device and the processing functions. The processing functions can be performed by one or several devices. They can be integrated into the immersive video rendering device or they can be integrated into one or several processing devices. The processing device comprises one or several processors and a communication interface with the immersive video rendering device, such as a wireless or wired communication interface.

The processing device can also comprise a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as a IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system comprises an auxiliary device which communicates with the immersive video rendering device and with the processing device. In such an embodiment, this auxiliary device can contain at least one of the processing functions.

The immersive video rendering device may comprise one or several displays. The device may employ optics such as lenses in front of each of its display. The display can also be a part of the immersive display device like in the case of smartphones or tablets. In another embodiment, displays and optics may be embedded in a helmet, in glasses, or in a visor that a user can wear. The immersive video rendering device may also integrate several sensors, as described later on. The immersive video rendering device can also comprise several interfaces or connectors. It might comprise one or several wireless modules in order to communicate with sensors, processing functions, handheld or other body parts related devices or sensors.

The immersive video rendering device can also comprise processing functions executed by one or several processors and configured to decode content or to process content. By processing content here, it is understood all functions to prepare a content that can be displayed. This may comprise, for instance, decoding a content, merging content before displaying it and modifying the content to fit with the display device.

One function of an immersive content rendering device is to control a virtual camera which captures at least a part of the content structured as a virtual volume. The system may comprise pose tracking sensors which totally or partially track the user's pose, for example, the pose of the user's head, in order to process the pose of the virtual camera. Some positioning sensors may track the displacement of the user. The system may also comprise other sensors related to environment for example to measure lighting, temperature or sound conditions. Such sensors may also be related to the users' bodies, for instance, to measure sweating or heart rate. Information acquired through these sensors may be used to process the content. The system may also comprise user input devices (e.g. a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Using figures 2 to 6, several embodiments are described of this first type of system for displaying augmented reality, virtual reality, augmented virtuality or any content from augmented reality to virtual reality.

**Figure 2** illustrates a particular embodiment of a system configured to decode, process and render immersive videos. The system comprises an immersive video rendering device 10, sensors 20, user inputs devices 30, a computer 40 and a gateway 50 (optional).

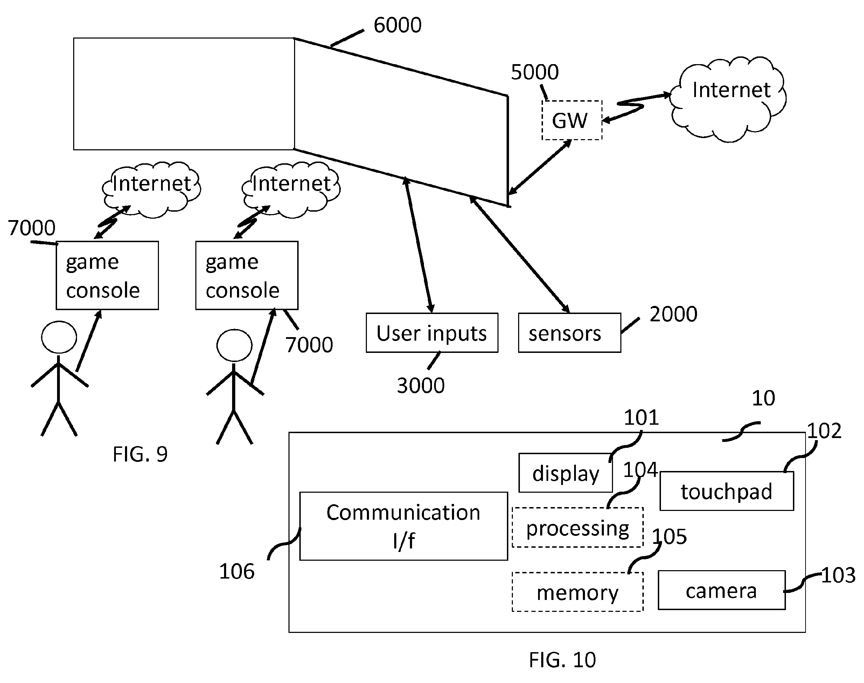

The immersive video rendering device 10, illustrated on Figure 10, comprises a display 101. The display is, for example of OLED or LCD type. The immersive video rendering device 10 is, for instance a HMD, a tablet or a smartphone. The device 10 may comprise a touch surface 102 (e.g. a touchpad or a tactile screen), a camera 103, a memory 105 in connection with at least one processor 104 and at least one communication interface 106. The at least one processor 104 processes the signals received from the sensors 20. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Data from sensors 20 and user input devices 30 can also be transmitted to the computer 40 which will process the data according to the input of these sensors.

Memory 105 includes parameters and code program instructions for the processor 104. Memory 105 can also comprise parameters received from the sensors 20 and user input devices 30. Communication interface 106 enables the immersive video rendering device to communicate with the computer 40. The Communication interface 106 of the processing device is wireline interfaces (for example a bus interface, a wide area network interface, a local area network interface) or wireless interfaces (such as a IEEE 802.11 interface or a Bluetooth® interface). Computer 40 sends data and optionally control commands to the immersive video rendering device 10. The computer 40 is in charge of processing the data, i.e. prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g. decodes them and possibly prepares the part of the video content that is going to be displayed by the immersive video rendering device 10) and sends the processed data to the immersive video rendering device 10 for display. In a variant, the system may also comprise local storage (not represented) where the data representative of an immersive video are stored, said local storage can be on the computer 40 or on a local server accessible through a local area network for instance (not represented).

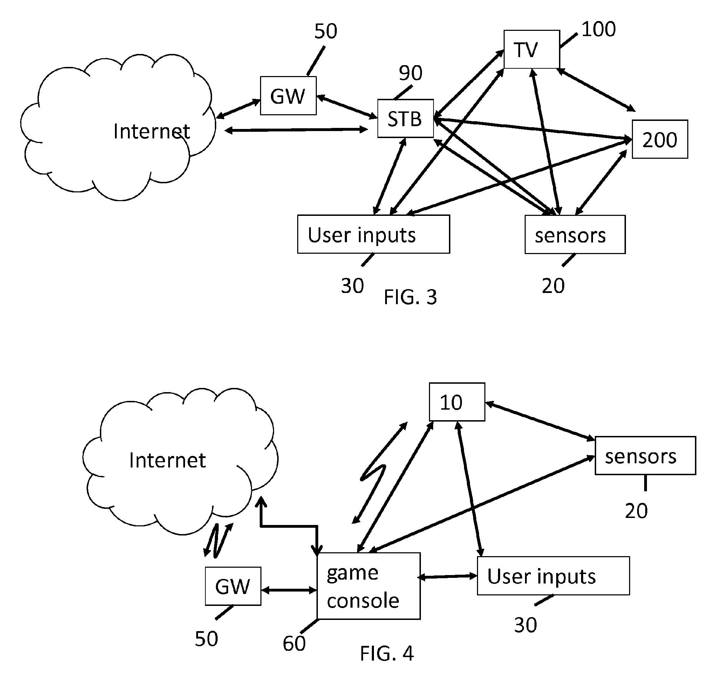

**Figure 3** represents a second embodiment. In this embodiment, a STB 90 is connected to a network such as internet directly (i.e. the STB 90 comprises a network interface) or via a gateway 50. The STB 90 is connected through a wireless interface or through a wired interface to rendering devices such as a television set 100 or an immersive video rendering device 200. In addition to classic functions of a STB, STB 90 comprises processing functions to process video content for rendering on the television 100 or on any immersive video rendering device 200. These processing functions are the same as the ones that are described for computer 40 and are not described again here. Sensors 20 and user input devices 30 are also of the same type as the ones described earlier with regards to Figure 2. The STB 90 obtains the data representative of the immersive video from the internet. In a variant, the STB 90 obtains the data representative of the immersive video from a local storage (not represented) where the data representative of the immersive video are stored.

**Figure 4** represents a third embodiment related to the one represented in Figure 2. The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In a variant, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g. decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

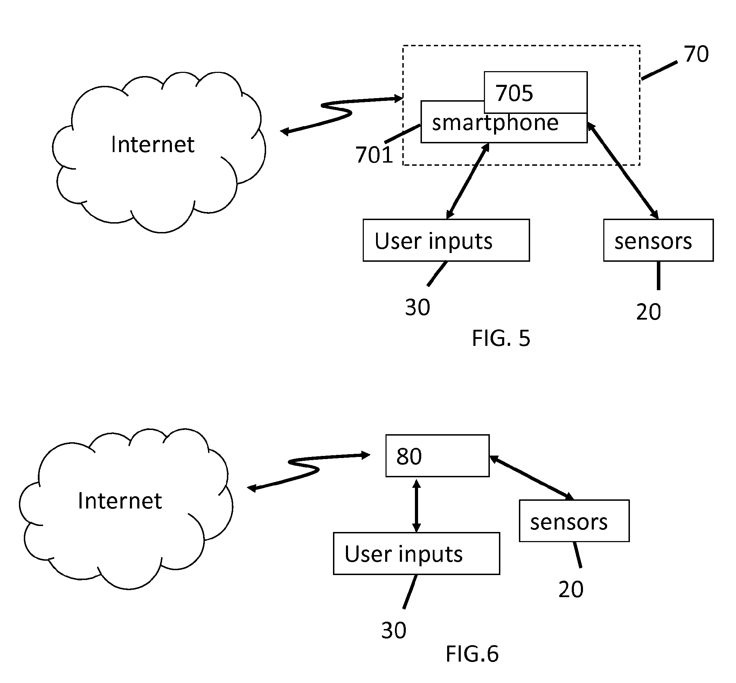

**Figure 5** represents a fourth embodiment of said first type of system where the immersive video rendering device 70 is formed by a smartphone 701 inserted in a housing 705. The smartphone 701 may be connected to internet and thus may obtain data representative of an immersive video from the internet. In a variant, the smartphone 701 obtains data representative of an immersive video from a local storage (not represented) where the data representative of an immersive video are stored, said local storage can be on the smartphone 701 or on a local server accessible through a local area network for instance (not represented).

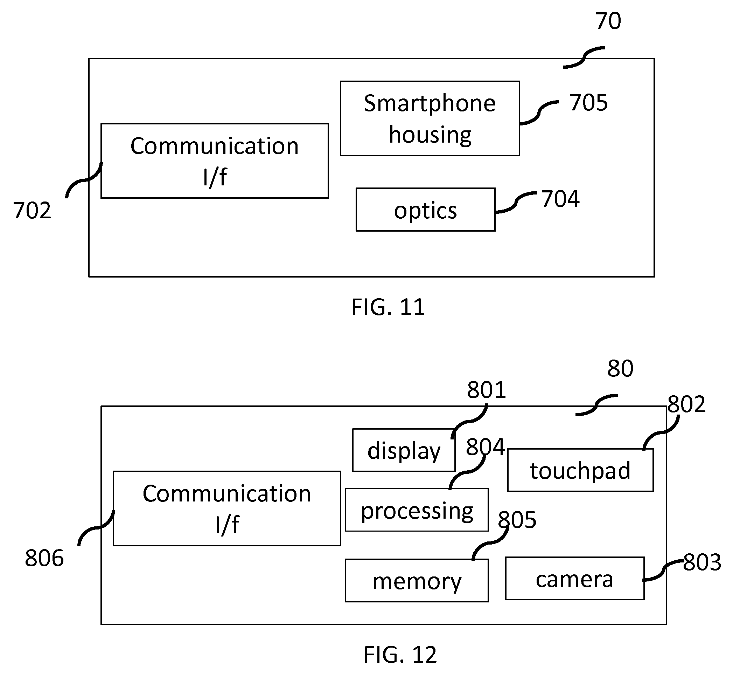

Immersive video rendering device 70 is described with reference to Figure 11 which gives a preferred embodiment of immersive video rendering device 70. It optionally comprises at least one network interface 702 and the housing 705 for the smartphone 701. The smartphone 701 comprises all functions of a smartphone and a display. The display of the smartphone is used as the immersive video rendering device 70 display. Therefore no display other than the one of the smartphone 701 is included. However, optics 704, such as lenses, are included for seeing the data on the smartphone display. The smartphone 701 is configured to process (e.g. decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

**Figure 6** represents a fifth embodiment of said first type of system in which the immersive video rendering device 80 comprises all functionalities for processing and displaying the data content. The system comprises an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to internet and thus may obtain data representative of an immersive video from the internet. In a variant, the immersive video rendering device 80 obtains data representative of an immersive video from a local storage (not represented) where the data representative of an immersive video are stored, said local storage can be on the rendering device 80 or on a local server accessible through a local area network for instance (not represented).

The immersive video rendering device 80 is illustrated on Figure 12. The immersive video rendering device comprises a display 801. The display can be for example of OLED or LCD type, a touchpad (optional) 802, a camera (optional) 803, a memory 805 in connection with at least one processor 804 and at least one communication interface 806. Memory 805 comprises parameters and code program instructions for the processor 804. Memory 805 can also comprise parameters received from the sensors 20 and user input devices 30. Memory can also be large enough to store the data representative of the immersive video content. For this several types of memories can exist and memory 805 can be a single memory or can be several types of storage (SD card, hard disk, volatile or non-volatile memory...) Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

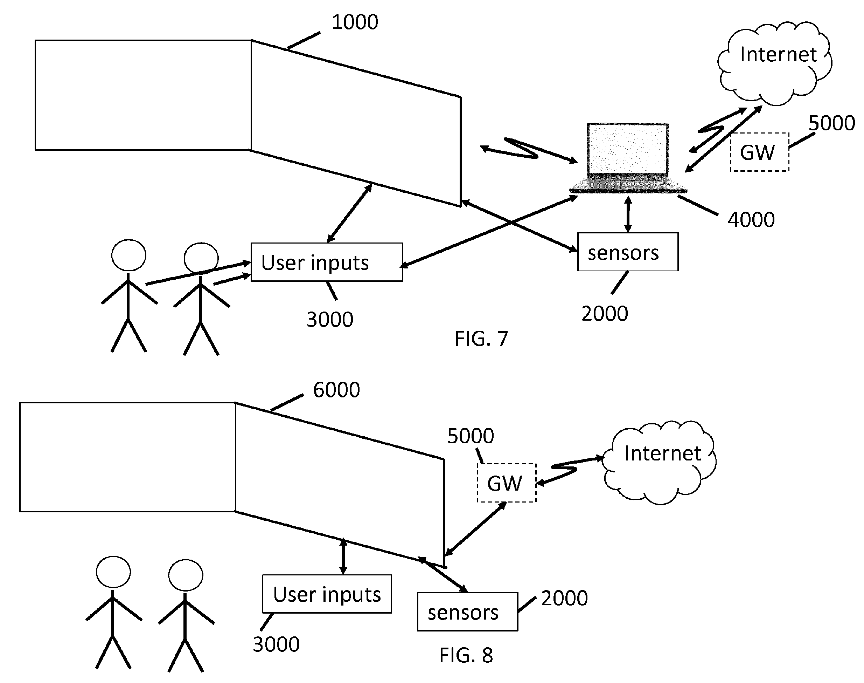

A second system, for processing augmented reality, virtual reality, or augmented virtuality content is illustrated in figures 7 to 9. Such a system comprises an immersive wall.

**Figure 7** represents a system of the second type. It comprises a display 1000 which is an immersive (projective) wall which receives data from a computer 4000. The computer 4000 may receive immersive video data from the internet. The computer 4000 is usually connected to internet, either directly or through a gateway 5000 or network interface. In a variant, the immersive video data are obtained by the computer 4000 from a local storage (not represented) where the data representative of an immersive video are stored, said local storage can be in the computer 4000 or in a local server accessible through a local area network for instance (not represented).

This system may also comprise sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g. position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e. preparing them for display, to be displayed by the immersive wall 1000. Processing can be done exclusively by the computer 4000 or part of the processing can be done by the computer 4000 and part by the immersive wall 1000.

**Figure 8** represents another system of the second type. It comprises an immersive (projective) wall 6000 which is configured to process (e.g. decode and prepare data for display) and display the video content. It further comprises sensors 2000, user input devices 3000.

The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also comprise sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g. position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.

**Figure 9** illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also comprise internal memory to store the content to be displayed.

According to non-limitative embodiments of the present disclosure, methods and devices for decoding video images from a stream, the video being a two-dimensional video (2D video) into which an omnidirectional video (360° video or 3D video) is mapped, are disclosed. Methods and devices for encoding video images in a stream, the video being a 2D video into which an omnidirectional video is mapped are, also disclosed. A stream comprising indication (syntaxes) describing the mapping of an omnidirectional video into a two-dimensional video is also disclosed. Methods and devices for transmitting a stream including such indication are also disclosed.

**3D-to-2D mapping indication inserted in a bit stream**

According to the present disclosure, a stream comprises encoded data representative of a sequence of images (or video), wherein an image (or frame or picture) is a two-dimensional array of pixels into which an omnidirectional image is mapped. The 2D image is associated with indication representative of the mapping of the omnidirectional video to a two-dimensional video. Advantageously, an indication is encoded with the stream. That indication comprises items, also called high-level syntax elements by the skilled in the art of compression, describing the way the coded video has been mapped from the 360° environment to the 2D coding environment. Specific embodiments for such syntax elements are described hereafter.

**Simple mapping identifiers**

According to a specific embodiment, the indication comprising a first item representative of the type of surface used for the mapping. Advantageously, the mapping belongs to a group comprising at least one of an equirectangular mapping, a cube mapping or a pyramid mapping. The indication thus allows both the decoding device and the immersive rendering device to determine a mapping function among a set of default mapping functions or pre-defined mapping functions by using a mapping identifier (mapping-ID). Thus both the decoding device and the immersive rendering device know the type of projection used in the omnidirectional-to-2D mapping. The equirectangular mapping, a cube mapping or a pyramid mapping as well-known standard mapping functions from 3D-space to a plan space. However, a default mapping function is not limited to those well-known variants.

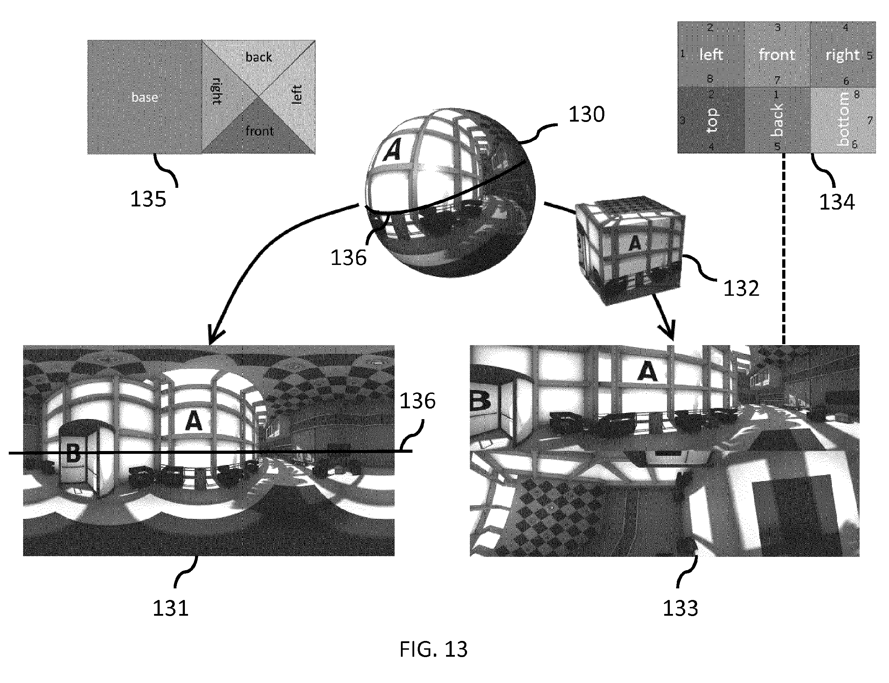

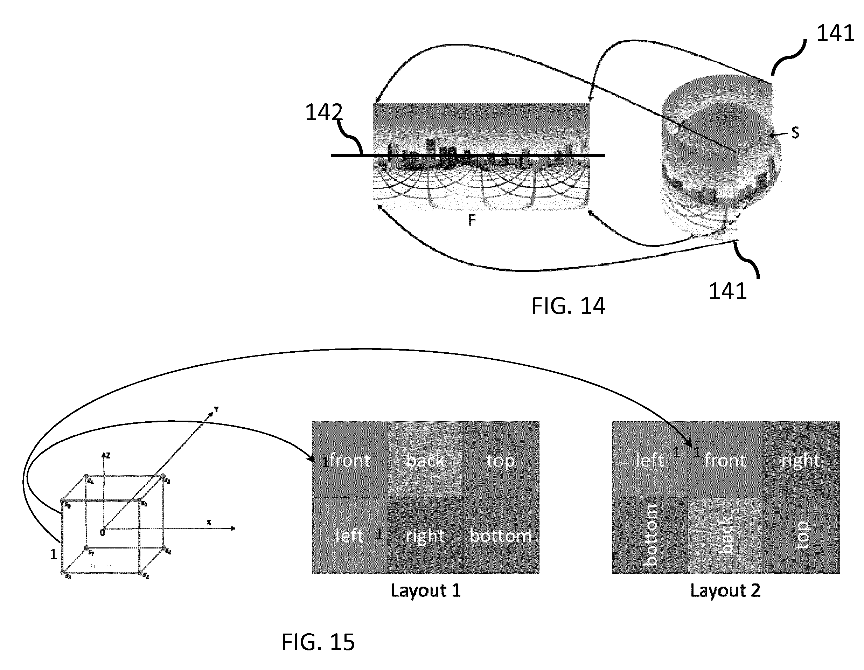

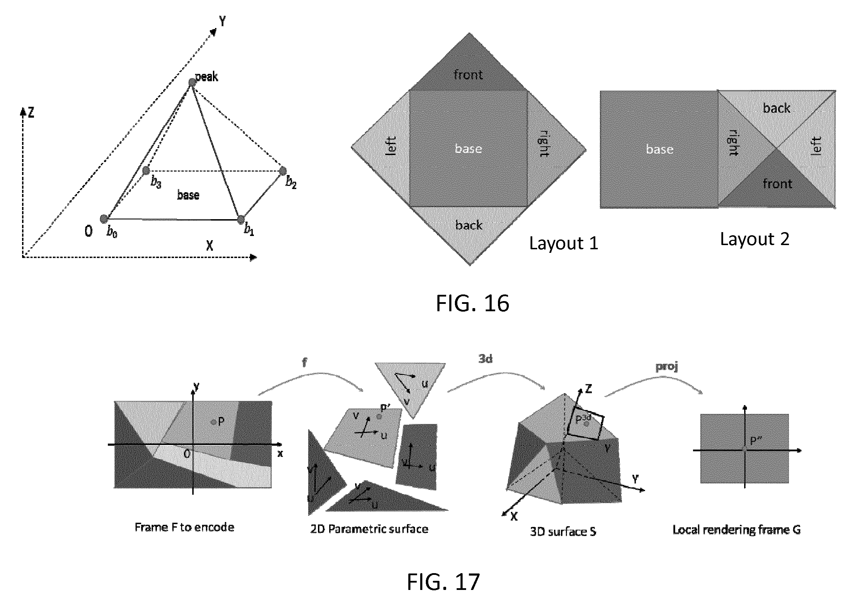

**Figure 13** shows an example of mapping an omnidirectional video on a frame according to two different mapping functions. A 3D scene, here a hotel hall, is projected on a spherical mapping surface 130. A front direction is selected for mapping the surface on a frame. The front direction may correspond to the part of the content displayed in front of the user when rendering on an immersive video rendering device as described on figures 2 to 12. In the example of figure 13, the front direction is facing the window with an 'A' printed on it. A revolving door with a 'B' printed on stands on the left of the front direction. The pre-processing module of figure 1 performs a mapping of the projection 130 in a frame. Different mapping functions may be used leading to different frames. In the example of figure 13, the pre-processing module 300 generates a sequence of frames 131 according to an equirectangular mapping function applied to the sphere 130. In a variant, the pre-processing module 300 performs a mapping space change, transforming the sphere 130 into a cube 132 before mapping the cube 132 on a frame 133 according to a cube layout 134. The example cube layout of the figure 13 divides the frame in six sections made of two rows of three squares. On the top row lie left, front and right faces of the cube; on the bottom row lie top back and bottom faces of the cube with a 90° rotation. Continuity is ensured in each row. Numbers on the representation of the cube layout 134 represents the cube edges' connections. In another variant, the pre-processing module 300 performs a mapping space change, transforming the sphere 130 into a pyramid before mapping the pyramid on a frame according to a pyramid layout 135. Indeed, different layouts can be used for any of mapping functions as illustrated in figures 14, 15 or 16. Besides other variant of space (associated with a projection surface) may be used as illustrated on figure 17. Here, a default mapping includes indication on both the surface used in the projection and a default layout 134, 135 used by the projection, i.e. any indication needed for mapping back the 2D frame into the 3D space for immersive rendering. Of course, the respective default mappings presented in figure 13 are non-limiting examples of default mappings. Any mapping, defined as default by a convention between encoding and decoding/rendering, is compatible with the present principles.

According to this specific embodiment, a first item is defined that corresponds to the identifier of the default omnidirectional-to-2D mapping (360_mapping_id) being used to generate the coded data. In other words, a mapping-ID field is inserted into the stream comprising encoded data representative of the sequence of images in a mapping information message.

**Table 1: Proposed 360 mapping information message**

| 360_mapping_information( payloadSize ) { | **Descriptor** |
|---|---|
| **360_mapping_id** | ue(v) |
| } | |

**Table 2: exemplary mapping IDs used to identify pre-defined 360° video mapping methods.**

| 1 | Equirectangular |
|---|---|
| 2 | Cube Mapping |
| 3 | Pyramid Mapping |

According to a first characteristic, the proposed mapping information message is encoded within a dedicated SEI message. The SEI message being a Supplemental Enhancement Information according to ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265, hereinafter "HEVC". This characteristic is well adapted to be delivered to immersive rendering device wherein the mapping information is used as side information outside the video codec.

According to a second characteristic, the proposed mapping information message is encoded in a sequence-level header information, like the Sequence Parameter Set specified in HEVC.

According to a third characteristic, the proposed mapping information message is encoded in a picture-level header information, like the Picture Parameter Set specified in HEVC.

The second and third characteristics are more adapted to be delivered to decoding device where information is extracted by the decoder from the coded data. Hence, some normative decoding tool that exploits features (such as geometric distortion, periodicity or discontinuities between 2 adjacent pixels depending on the frame layout) of the considered mapping can be used by the decoder in that case.

**Advanced 360 mapping indication**

According to others specific embodiments, the indication comprises additional items that describe more precisely how the omnidirectional to 2D picture mapping is arranged. Those embodiments are particularly well adapted in case where default mappings are not defined or in case the defined default mappings are not used. This may be the case for improved compression efficiency purposes for example. According to non-limitative examples, the mapping is different from a default mapping because the surface of projection is different, because the front point of projection is different leading in a different orientation in the 3D space, or because the layout on the 2D frame is different.

According to one specific embodiment, the indication further comprises a second item representative of the orientation of the mapping surface in the 3D space. Indeed, some parameters (phi_0, theta_0) common to any type of mapping are provided, in order to indicate the orientation of the mapping surface in the 3D space. In practice, these two angle parameters are used to specify the 3D space coordinate system in which mapping surfaces are described later in. The orientation is given with respect to the front point of projection (according the front direction A of figure 13) corresponding to a point where the projection surface is tangent to the sphere of the 3D space. The parameters are used in an immersive rendering system as described with figures 2 to 12.

Advantageously the parameters are followed by the identifier (360_mapping_id) of the omnidirectional-to-2D mapping, which indicates which type of 3D to 2D surface is used so as to carry further items representative of different variants of an equirectangular mapping, a cube mapping or a pyramid mapping. In this embodiment, the identifier (360_mapping_id) of the omnidirectional-to-2D mapping only specifies the type of surface used in projection and does not refers to others specificities of the pre-defined default mapping which then need to be detailed. Indeed, another binary value (default_equirectangular_mapping_flag, or default_cube_mapping_flag) is used to determine whether the mapping is the default one (1) or not (0). According to this variant, the indication comprises in addition to the mapping identifier (360_mapping_id), a binary value (or flag) representative of the usage of the corresponding default mapping. Variants of equirectangular mapping, cube mapping or pyramid mapping are now described.

In case of the equi-rectangular mapping (360_mapping_id == 1), a binary value (default_equirectangular_mapping_flag) indicates if the default mode is used (1) wherein the default equi-rectangular mapping is assumed to be the one introduced with respect to figure 13. If so, no further item of mapping indication is provided. If a non-default equi-rectangular mapping is used (0), then additional items of mapping indication are provided to more fully specify the equirectangular mapping. According to non-limiting variants, a binary value (equator_on_x_axis_flag) indicates if the equator 136 is parallel to the x-axis of the mapped 2D picture or not. If not the equator axis is inferred to be the y-axis in the mapped 2D picture. Indeed, according to a particular equi-rectangular mapping, the layout of the equirectangular projection can be arranged along any of the 2D frame axis. In another variant, some coordinates along the axis orthogonal to the equator are coded, in order to indicate the position of the poles (top_pole_coordinate_in_2D_picture, top_pole_coordinate_in_2D_picture) and of the equator ( equator_coordinate_in_2D_picture) on this axis. Indeed, according to a particular equi-rectangular mapping, it is possible that the poles and the equator fall in a location different from those of the default equi-rectangular mapping.

According to another specific embodiment, the indication further comprises a third item representative of the density of the pixels mapped on the surface

(density_infomation_flag). As shown on **figure 14,** the projection from a sphere to a frame results in non-uniform pixel density. A pixel in the frame F to encode does not always represent the same surface on the surface S (i.e. the same surface on the image during the rendering). For instance, in the equirectangular mapping the pixel density is quite different between a pole 141 and the equator 142. This density information flag indicates if a density lookup-table is encoded in the considered mapping information message. If so, then this density information flag is followed by a series of coded density values, which respectively indicate the (normalized) pixels density for each line/column parallel to the mapped equator. This density information is helpful to allow the codec of a decoding device to select normative video coding tools adapted to equi-rectangular mapped videos.

According to another specific embodiment, the indication further comprises a fourth item representative of the layout of the mapping surface into the frame. This embodiment is particularly well adapted to cube mapping or pyramid mapping where the different faces of the cube or pyramid can be arranged in the encoded frame in various ways. However, this embodiment is also compatible with the equirectangular mapping in case, for instance, the equator would not be placed at the middle of the frame.

Thus, in case of the cube mapping (360_mapping_id == 2), a syntax element specifying the layout of the cube mapping may be included in the proposed mapping indication as illustrated by Table 3.

**Figure 15** illustrates a first and a second layout for a cube mapping as well as the 3D space representation of the cube used in the projection. First, the coordinates of the cube's vertices (SO - S7) in the 3D space, indicating how the cube is oriented in the 3D space, need to be identified. To do so, each vertex's coordinates (coordinate_x, coordinate_y, coordinate_z) are indicated following a pre-fixed ordering (S0 - S7) of the vertices. Then, some non-limitative exemplary cube mapping layouts in the 2D frame to be processed by the video codec are illustrated in figure 15. Layout 1 or Layout 2 indicate the arrangement of cube faces once the 3D surface is put on a same 2D plan. As for the default mapping, a layout identifier (cube_2D_layout_id) is used assuming that each possible layout is pre-defined and that each pre-defined layout is associated with a particular identifier corresponding for instance to layout 1 or layout 2 of figure 15. According to another embodiment, the layout may be explicitly signaled in the proposed mapping information message as latter on described with respect to tables 4 and 5. Explicitly signalling the cube mapping layout would consist in an ordered list of cube faces identifier, which describes how the cube's faces are arranged in the target 2D plan. For instance, in the case of layout 1 of figure 15, such ordered list would take the form (3, 2, front, back, top, left, right, bottom), meaning that faces are arranged according to a 3x2 array of faces, and following the face order of the ordered list.

Advantageously, the variant of a binary value (default_cube_mapping_flag) indicating if a default mode with a default layout is used (1) wherein the default layout 134 mapping is assumed to be the one introduced with respect to figure 13, is also compatible with the previous cube mapping embodiment. If so, no further item of mapping indication is provided. Else the above items explicitly describing the cube layout are inferred in the mapping indication.

In case of the pyramid mapping (360_mapping_id == 3 ), same principles can be applied. A syntax element specifying the layout of the pyramid mapping may be included in the proposed mapping indication, as illustrated by Table 3. Figure 16 illustrates a first and a second layout for pyramidal mapping as well as the 3D space representation of the pyramid. First, the coordinates of the pyramid's vertices in the 3D space are identified so as to indicate how the pyramid is oriented in the 3D space. To do so, each vertex's coordinates of the base (base_x, base_y, base_z) is indicated following a pre-fixed ordering of the vertices (B0-B3) as well as peak's coordinates (peak_x, peak_y, peak_z). A pyramid 2D layout identifier (pyramid_2D_layout_id) indicates the arrangement of faces once the 3D surface is put on a same 2D plan. Two non-limitative typical 2D layouts issued from the pyramid mapping are illustrated on figure 16, and can be referred to through a value of the pyramid_2D_layout_id syntax element of Table 3, respectively associated to each possible 2D layout issued from the sphere to pyramid mapping.

The proposed advance mapping indication is illustrated by Table 3.

**Table 3: proposed mapping information message with further information specifying how the mapping is performed.**

| 360_mapping_information( payloadSize ) { | Descriptor |
|---|---|
| **phi_0** | ue(v) |
| **pheta_0** | ue(v) |
| **360_mapping_id** | ue(v) |
| if( 360_mapping_id == 1), ){ | |
| **default_equirectangular_mapping_flag** | u(1) |
| if( !default_equirectangular_mapping_flag ){ | |
| **equator_on_x_axis_flag** | u(1) |
| **equator_coordinate_in_2D_picture** | |
| **top_pole_coordinate_in_2D_picture** | u(v) |
| **bottom_pole_coordinate_in_2D_picture** | u(v) |
| **density_infomation_flag** | u(1) |
| for( i = 0 ; i < nbDensityValues ; i++ ){ | |

(continued)

| | |
|---|---|
| density_value[i] | u(v) |
| } | |
| } | |
| } | |
| if( 360_mapping_id == 2 ){ | |
| for (i=0; i<8; i++){ | |
| coordinate_x | u(v) |
| coordinate_y | u(v) |
| coordinate_z | u(v) |
| } | |
| cube_2D_layout_id | ue(v) |
| } | |
| if( 360_mapping_id == 3 ){ | |
| for (i=0; i<4; i++){ | |
| base_x | u(v) |
| base_y | u(v) |
| base_z | u(v) |
| } | |
| peak_x | u(v) |
| peak_y | u(v) |
| peak_z | u(v) |
| pyramid_2D_layout_id | ue(v) |
| } | |
| } | |

According to yet another specific embodiment, the layout of cube mapping or pyramidal mapping is not defined by default and selected through their respective identifier; the indication then comprises a fifth item allowing to describe the layout of the mapping surface into the frame. A syntax element allowing to describe an explicitly layout of the 3D-to-2D mapping may be included in the proposed mapping indication, as illustrated by Table 4.

In case of the cube mapping (360_mapping_id == 2), a binary value (basic_6_faces_layout_flag) indicates if the default cubic layout mode is used (1) wherein the default cubic layouts are assumed to be the ones introduced with respect to figure 15. If so, no further item of mapping indication is provided and the cubic layout identifier may be used. If a non-default cubic layout is used (0), then additional items of mapping indication are provided to fully specify the layout. In a first optional variant, the size of a face (face_width, face_height) in the 2D frame is indicated. Then each face's position (face_pos_x, face_pos_y) indicates following a pre-fixed ordering of the faces (1-6 as shown in table 5), the position of the face in the 2D frame. Advantageously, the same principles are derived for describing the pyramid layout

**Table 4: more advanced embodiment for Cube Layout Signaling Syntax**

| 360_mapping_information( payloadSize ) { | Descriptor |
|---|---|
| ... | ... |
| } | |
| if( 360_mapping_id == 2 ){ | |
| basic_6_faces_layout_flag | u(1) |

(continued)

| | |
|---|---|
| if( !basic_6_faces_layout_flag ){ | |
| **face_width** | u(v) |
| **face_height** | u(v) |
| } | |
| for( i = 0 ; i < nbFaces ; i++ ){ | |
| **face_id** | u(v) |
| if( !basic_6_faces_layout_flag ){ | |
| **face_pos_x** | u(v) |
| **face_pos_y** | u(v) |
| } | |
| } | |
| } | |
| if( 360_mapping_id == 3 ){ | |
| **default_5_faces_pyramid_layout_flag** | u(1) |
| for( i = 0 ; i < nbFaces ; i++ ){ | |
| **face_id** | u(v) |
| if( !default_5_faces_pyramid_layout_flag ){ | |
| **face_pos_x** | u(v) |
| **face_pos_y** | u(v) |
| } | |
| } | |

**Table 5: Cube faces identifiers associated to the more advanced cube layout syntax proposed**

| | |
|---|---|
| 0 | Void |
| 1 | Front |
| 2 | Left |
| 3 | Right |
| 4 | Back |
| 5 | Top |
| 6 | Bottom |

**Generic 360 mapping indication**

According to others specific embodiments, the proposed omnidirectional mapping indication comprises a generic syntax able to indicate any reversible transformation from the 3D sphere to the coded frame F. Indeed, the previous embodiments are directed at handling most common omnidirectional-to-2D mappings wherein the projection uses a sphere, a cube or a pyramid.

However, the generic case for omnidirectional video representation consists in establishing a correspondence between the 2D frame F and the 3D space associated to the immersive representation of the considered video data. This general concept is shown on figure 17, which illustrated the correspondence between the 2D frame F and a 3D surface S that may be defined in different ways. P is a point (x,y) in the coded 2D frame F. P' is a point on the 2D surface of acquisition, image of P. For example, for the sphere P' is the point expressed using polar coordinate on the sphere. For the cube, 6 local parametrizations are used. $P^{3d}$ is the point P' in the 3D space, belonging to the 3D surface of acquisition, using Cartesian coordinate system. P" is the point $P^{3d}$ projected on the local plan tangent to the surface at $P^{3d}$. By construction P" is at the center of the frame G.

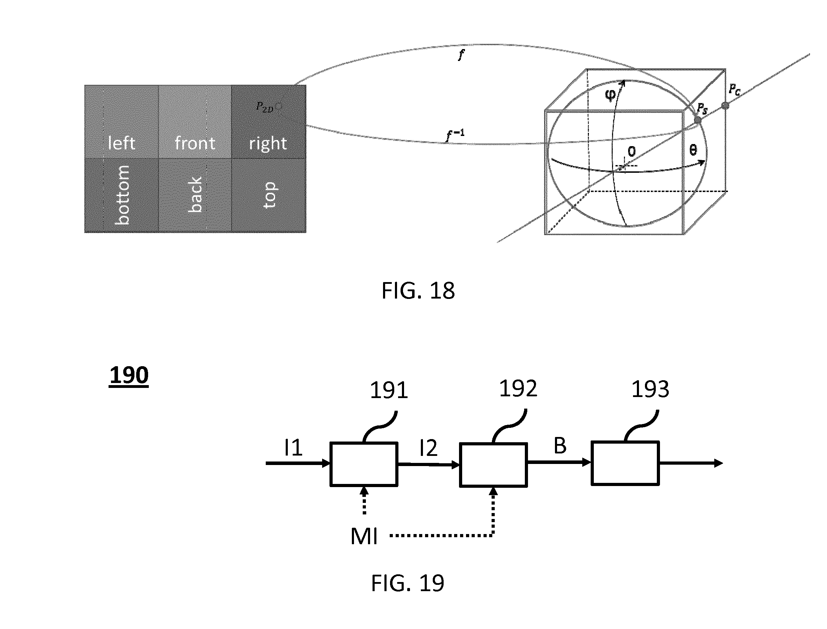

In the case of equi-rectangular mapping, the 3D surface S is the sphere of figure 13. The sphere is naturally adapted to an omnidirectional content. However, the 3D surface S may be different from the sphere. As an example, in a cube mapping, the 3D surface S is the cube of figure 13. This makes it complex to specify a generic, simple, mapping representation syntax able to handle any 2D/3D mapping and de-mapping. To overcome the problem of providing a generic mapping representation syntax able to handle any 2D/3D mapping and de-mapping, the correspondence between any 2D frame F and the 3D sphere is indicated according to this embodiment so as to benefit from the properties of the 3D sphere. Indeed, it is possible to easily transform the video pixel data on the cube into video pixel data defined on the sphere. This is illustrated on the right of figure 18 in the case of the cube, which provides the simple geometric relationship that exists between the normalized cube and the sphere. One understands that the point $P_S$ on the sphere that corresponds to a point $P_C$ on the cube is on the intersection between the ray $[0,P_C)$ and the sphere, which trivially provides the point $P_S$.

Similar correspondence can be established with the pyramid, the tetrahedral, and any other geometric volume. Therefore according to generic mapping indication embodiment, the mapping indication comprises a sixth item representative of the forward and backward transform between the 2D frame F (in Cartesian coordinates) and the 3D sphere in polar coordinates. This corresponds to the *f* and *f*<sup>-1</sup> functions illustrated on figure 18.

A basic approach to provide this generic mapping item consists in coding a function from the 2D space of the coding frame F towards the 3D sphere.

Such mapping and inverse mapping functions both go from a 2D space to another 2D space. An exemplary syntax specification for specifying such mapping function is illustrated by Table 6, under the form of two 2D lookup tables. This corresponds to generic mapping mode shown in Table 6.

Note that on Table 6, the sampling of the coding picture F used to signal the forward mapping function *f* consists in a number of picture samples equal to the size (width and height) of coding picture F. On the contrary, the sampling of the sphere used to indicate de-mapping *f*<sup>-1</sup> makes use of a sphere sampling that may depend on the 360° to 2D mapping process, and which is explicitly signaled under the form of the *sphereSamplingHeight* and *sphereSamplingWidth* fields.

**Table 6: more advanced embodiment of the proposed 360° mapping indication including the Generic mode.**

| 360_mapping_information( payloadSize ) { | Descriptor |
|---|---|
| **360_mapping_id** | ue(v) |
| if( 360_mapping_id == 1), ){ | |
| --- | |
| } | |
| if( 360_mapping_id == 2 ){ | |
| --- | |
| } | |
| if( 360_mapping_id == 3 ){ | |
| -- | |
| } | |
| if( 360_mapping_id == 4 ){ | |
| ... | |
| } | |
| if( 360_mapping_id == GENERIC ){ | |
| for( j = 0 ; j < pictureHeight ; j++ ){ | |
| for( i = 0 ; i < pictureWidth ; i++ ){ | |
| **phi[j][i]** | u(v) |
| **theta[j][i]** | u(v) |

(continued)

| | |
|---|---|
| } | |
| } | |
| sphereSamplingHeight | u(v) |
| sphereSamplingWidth | u(v) |
| for( j=0; j<sphereSamplingHeight; j++ ){ | |
| for( i = 0 ; i < sphereSamplingWidth ; i++ ){ | |
| $phi=\left(\frac{j}{sphereHeight}-1/2\right)\times\pi$ | |
| $theta=\left(\frac{i}{sphereWidth}-1/2\right)\times 2\pi$ | |
| **x[phi][theta]** | u(v) |
| **y[phi][theta]** | u(v) |
| } | |
| } | |
| } | |
| } | |

**Generic 360 mapping indication with an intermediate sampling space**

According to a last embodiment, the proposed omnidirectional mapping indication comprises an even more generic syntax able to handle any case of 360° to 2D mapping and its reverse 2D to 360° de-mapping system, considered in any use case.

Here, the goal is to provide and syntax coding that is able to handle any case of set of (potentially multiple) parametric surface that may be used as an intermediate data representation space, in the transfer from the 2D coding space to the 3D environment, and the reverse.

To do so, the 2D to 3D transfer syntax is unchanged compared to the previous embodiment. The 3D to 2D mapping process is modified as follows.

As illustrated by Table 7, an intermediate multi-dimensional space is fully specified, through its dimension, its size along each axis. This takes the form of the *dim, size_1, ..., size_dim*, syntax elements. Next, the transfer from the 3D sphere (indexed with polar coordinates $\theta$) towards this intermediate space is specified through the series of syntax elements (l1[phi][theta], l2[phi][theta], ..., ldim[phi][theta]) which indicate coordinates in the multi-dimensional intermediate space, as a function of each $(\varphi,\theta)$ set of polar coordinates in the sphere.

Finally, a last transfer function from the dim-dimensional intermediate space towards the 2D codec frame F is specified through the series of syntax elements (x[l$_1$][l$_2$]...[l$_{dim}$], y[l$_1$][l$_2$]...[l$_{dim}$]), which indicate the cartesian coordinates in the frame F, which correspond to the coordinate (l$_1$,l$_2$,...,l$_{dim}$) in the intermediate space.

**Table 7: proposed generic 360° mapping indication including an intermediate mapping and de-mapping space between the 2D frame and 3D sphere**

| 360_mapping_information( payloadSize ) { | **Descriptor** |
|---|---|
| **360_mapping_id** | ue(v) |
| if( 360_mapping_id == 1), ){ | |
| ... | ... |
| } | |
| if( 360_mapping_id == 2 ){ | |
| ... | ... |
| } | |

(continued)

| | |
|---|---|
| if( 360_mapping_id == 3 ){ | |
| ... | ... |
| } | |
| if( 360_mapping_id == 4 ){ | |
| ... | ... |
| } | |
| if( 360_mapping_id == GENERIC ){ | |
| for( j = 0 ; j < picture Height ; j++){ | |
| for( i = 0 ; i < pictureWidth ; i++ ){ | |
| **phi[j][i]** | u(v) |
| **theta[j][i]** | u(v) |
| } | |
| } | |
| **dim** | u(v) |
| **size_1** | u(v) |
| **size_2** | u(v) |
| ... | |
| **size_dim** | u(v) |
| for( j=0; j<sphereSamplingHeight; j++ ){ | |
| for( i = 0 ; i < sphereSamplingWidth ; i++ ) ){ | |
| $\text{phi}=\left(\frac{j}{sphereHeight} - 1/2\right) \times \pi$ | |
| $\text{theta}=\left(\frac{i}{sphereWidth} - 1/2\right) \times 2\pi$ | |
| **l$_1$[phi][theta]** | u(v) |
| **l$_2$[phi][theta]** | u(v) |
| ... | |
| **l$_{interimDim}$[phi][theta]** | u(v) |
| } | |
| } | |
| for( l$_1$=0; j<size_1; l$_1$++ ){ | |
| for( l$_2$ = 0 ; i < size_2 ; l$_2$++ ){ | |
| ... | |
| for( l$_{dim}$ = 0 ; i < size_dim ; l$_{dim}$++ ){ | |
| **x[l$_1$][l$_2$]...[l$_{dim}$]** | u(v) |
| **y[l$_1$][l$_2$]...[l$_{dim}$]** | u(v) |
| } | |
| ... | |
| } // end loop on l$_2$ | |

(continued)

| | |
|---|---|
| } // end loop on $I_1$ | |
| } | |
| } | |

**Implementation of mapping indication into encoding method, transmitting method, decoding method and rendering method.**

**Figure 19** diagrammatically illustrates a method 190 of encoding an image $I_1$ to be encoded of a sequence of images (or video), the image being a 2D image into which an omnidirectional image is mapped. This method is implemented in the encoding module 400 of Figure 1. At step 191, a mapping indication (MI) is used to select encoding tools adapted to the omnidirectional-to-2D mapping for instance by exploiting (some of) the properties of the video issued from a 3D-to-2D mapping, in order to provide increased compression efficiency compared to a 3D unaware encoding. As an example during motion compensated temporal prediction, this knowledge may help the codec, knowing the shape of the reference spatial area (usually known as reference block) of a rectangular block in current picture, to perform motion compensated temporal prediction of the rectangular block, by means of its associated motion vector. Those properties interesting for efficient encoding includes strong geometry distortions, non-uniform pixel density, discontinuities, and periodicity in the 2D image. The input image $I_1$ is encoded responsive to the mapping information MI and an encoded image I2 is output. According to the present principles, a step 192 generates a bit stream B carrying data representative of the sequence of encoded images and carrying an indication of the omnidirectional-to-2D mapping encoded within the stream in a lossless manner. Figure 19 also diagrammatically illustrates a method 193 of transmitting a bit stream B comprising an encoded image I2 and indication of the mapping MI of an omnidirectional image into the 2D encoded image. This method is implemented in the transmitting module 500 of Figure 1.

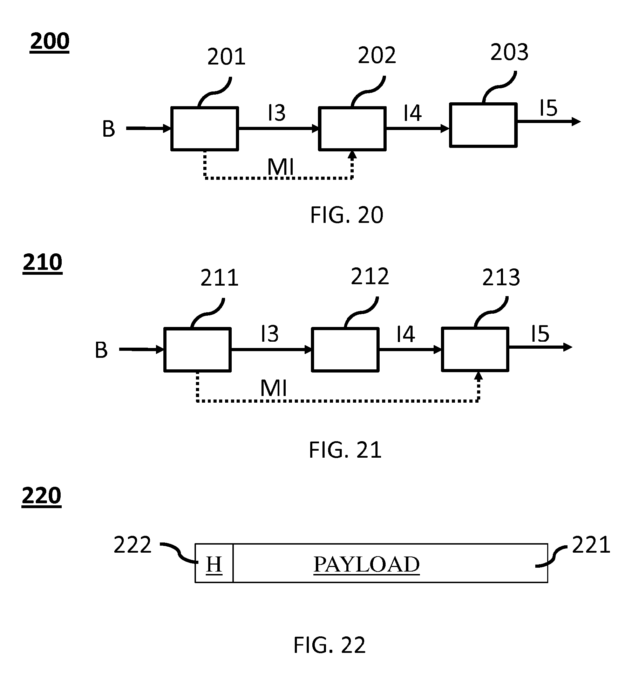

**Figure 20** diagrammatically illustrates a method of decoding an image using an indication on the omnidirectional mapping according to a particular embodiment of the present principles. A data source provides a bit stream B encoded according to the method 190 of figure 19. For example, the source belongs to a set of sources comprising a local memory (e.g. a video memory, a Random Access Memory, a flash memory, a Read Only Memory, a hard disk, etc.), a storage interface (e.g. an interface with a mass storage, an optical disc or a magnetic support) and a communication interface (e.g. a wireline interface (for example a bus interface, a wide area network interface, a local area network interface) or a wireless interface (such as a IEEE 802.11 interface or a Bluetooth® interface)). At a step 201, a coded image I3 is obtained from the stream, the coded image I3 corresponding to a coded 3D image mapped from 3D to 2D space. Mapping indication MI is also obtained from the bit stream B. In the step 202, a decoded image I4 is generated by a decoding responsive to tools adapted to the omnidirectional-to-2D mapping according to the mapping indication MI. In the step 203, a rendering image I5 is generated from the decoded image 14.

**Figure 21** diagrammatically illustrates a method of rendering an image using an indication on the omnidirectional mapping according to a particular embodiment of the present principles. A data source provides a bit stream B encoded according to the method 190 of figure 19. For example, the source belongs to a set of sources comprising a local memory (e.g. a video memory, a Random Access Memory, a flash memory, a Read Only Memory, a hard disk, etc.), a storage interface (e.g. an interface with a mass storage, an optical disc or a magnetic support) and a communication interface (e.g. a wireline interface (for example a bus interface, a wide area network interface, a local area network interface) or a wireless interface (such as a IEEE 802.11 interface or a Bluetooth® interface)). At a step 211, a coded image I3 is obtained from the stream, the coded image I3 corresponding to a coded 3D image mapped from 3D to 2D space. Mapping indication MI is also obtained from the bit stream B. In the step 202, a decoded image I4 is generated by 3D unware decoding of coded image 13. In the step 203, a rendering image I5 is generated from the decoded image I4 responsive to mapping indication MI on the omnidirectional-to-2D mapping used at the generation of the encoded image. Naturally embodiments of figure 20 and of figure 21 can be combined.

**Figure 22** illustrates a particular embodiment of the data structure of a bit stream 220 carrying data representative of a sequence of images encoded according to the method 190 of figure 19. The encoded images of the sequence form a first element of syntax of the bit stream 220 which is stored in the payload part of the bit stream 221. The mapping indication are comprised in a second element of syntax of the bit stream, said second element of syntax being comprised in the header part 222 of the bit stream 220. The header part 222 is encoded in a lossless manner.

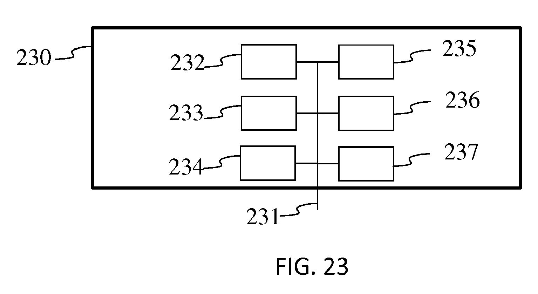

**Figure 23** shows a hardware embodiment of an apparatus 230 configured to implement any of the methods described in relation with figures 19, 20 or 21. In this example, the device 230 comprises the following elements, connected to each other by a bus 231 of addresses and data that also transports a clock signal:

- a microprocessor 232 (or CPU), which is, for example, a DSP (or Digital Signal Processor);
- a non-volatile memory of ROM (Read Only Memory) type 233;
- a Random Access Memory or RAM (234);
- an I/O interface 235 for reception of data to transmit, from an application; and
- a graphics card 236 which may embed registers of random access memory;
- a power source 237.

In accordance with an example, the power source 237 is external to the device. In each of mentioned memory, the word « register» used in the specification may correspond to area of small capacity (some bits) or to very large area (e.g. a whole program or large amount of received or decoded data). The ROM 233 comprises at least a program and parameters. The ROM 233 may store algorithms and instructions to perform techniques in accordance with present principles. When switched on, the CPU 232 uploads the program in the RAM and executes the corresponding instructions.

RAM 234 comprises, in a register, the program executed by the CPU 232 and uploaded after switch on of the device 230, input data in a register, intermediate data in different states of the method in a register, and other variables used for the execution of the method in a register.

The implementations described herein may be implemented in, for example, a module of one of the methods 190, 200 or 210 or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware which may be one of the components of the systems described in figures 2 to 12. The methods and their modules may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), set-top-boxes and other devices that facilitate communication of information between end-users, for instance the components of the systems described in figures 2 to 12.

In accordance with an example of encoding an image of a sequence images and an indication of the omnidirectional-to-2D mapping as illustrated on figure 19, a bit stream representative of a sequence of images is obtained from a source. For example, the source belongs to a set comprising:

- a local memory (233, 234 or 236), e.g. a video memory or a RAM (or Random Access Memory), a flash memory, a ROM (or Read Only Memory), a hard disk;

- a storage interface (235), e.g. an interface with a mass storage, a RAM, a flash memory, a ROM, an optical disc or a magnetic support; and

- a communication interface (235), e.g. a wireline interface (for example a bus interface, a wide area network interface, a local area network interface) or a wireless interface (such as a IEEE 802.11 interface or a Bluetooth® interface).

According to one particular embodiment, the algorithms implementing the steps of a method 190 of encoding an image of a sequence images using mapping indication are stored in a memory GRAM of the graphics card 236 associated with the device 230 implementing these steps. According to a variant, a part of the RAM (234) is assigned by the CPU (232) for storage of the algorithms. These steps lead to the generation of a video stream that is sent to a destination belonging to a set comprising a local memory, e.g. a video memory (234), a RAM (234), a ROM (233), a flash memory (233) or a hard disk (233), a storage interface (235), e.g. an interface with a mass storage, a RAM, a ROM, a flash memory, an optical disc or a magnetic support and/or received from a communication interface (235), e.g. an interface to a point to point link, a bus, a point to multipoint link or a broadcast network.

In accordance with an example of decoding an image of a sequence of images responsive to an indication of the omnidirectional-to-2D mapping, a stream representative of a sequence of images and including a mapping indication is obtained from a source. Exemplarily, the bit stream is read from a local memory, e.g. a video memory (234), a RAM (234), a ROM (233), a flash memory (233) or a hard disk (233). In a variant, the stream is received from a storage interface (235), e.g. an interface with a mass storage, a RAM, a ROM, a flash memory, an optical disc or a magnetic support and/or received from a communication interface (235), e.g. an interface to a point to point link, a bus, a point to multipoint link or a broadcast network.

According to one particular embodiment, the algorithms implementing the steps of a method of decoding an image of a sequence of images responsive to an indication of the omnidirectional-to-2D mapping are stored in a memory GRAM of the graphics card 236 associated with the device 230 implementing these steps. According to a variant, a part of the RAM (234) is assigned by the CPU (232) for storage of the algorithms. These steps lead to the composition of a video that is sent to a destination belonging to a set comprising the components of systems described in figures 2 to 12 such as, for instance:

- a mobile device;
- a communication device;
- a game device;
- a set-top-box;
- a TV set;
- a tablet (or tablet computer);
- a laptop;
- a display and
- a decoding chip.

Naturally, the present disclosure is not limited to the embodiments previously described.

In particular, the present disclosure is not limited to methods of encoding and decoding a sequence of images but also extends to any method of displaying the decoded video and to any device implementing this displaying method as, for example, the display devices of figures 2 to 12. The implementation of calculations necessary to encode and decode the bit stream is not limited either to an implementation in shader type microprograms but also extends to an implementation in any program type, for example programs that can be executed by a CPU type microprocessor. The use of the methods of the present disclosure is not limited to a live utilisation but also extends to any other utilisation, for example for processing known as postproduction processing in a recording studio.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a preprocessor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A video decoding method, **characterized in that** the method comprises:

   - decoding (202) an image of a video, the video being a 2D video into which an omnidirectional video is mapped; and
   - decoding (201) an indication of the mapping of the omnidirectional video into the 2D video, the indication comprising a first item representative of the type of surface used for the mapping belonging to a group comprising at least one of an equirectangular mapping, a cube mapping or a pyramid mapping.

2. A video encoding method **characterized in that** the method comprises:

   - encoding (191) an image of a video, the video being a 2D video into which an omnidirectional video is mapped; and
   - encoding (192) an indication of the mapping of the omnidirectional video into the 2D video, the indication comprising a first item representative of the type of surface used for the mapping belonging to a group comprising at least one of an equirectangular mapping, a cube mapping or a pyramid mapping, the indication being used in encoding (191) of the video image.

3. An apparatus (230) comprising a decoder for:

   - decoding an image of a video, the video being a 2D video into which an omnidirectional video is mapped; and
   - decoding an indication of the mapping of the omnidirectional video into the 2D video, the indication comprising a first item representative of the type of surface used for the mapping belonging to a group comprising at least one of an equirectangular mapping, a cube mapping or a pyramid mapping, the indication being used in decoding of the video image for immersive rendering.

4. An apparatus (230) comprising a encoder for:

   - encoding an image of a video, the video being a 2D video into which an omnidirectional video is mapped; and
   - encoding an indication of the mapping of the omnidirectional video into the 2D video, the indication comprising a first item representative of the type of surface used for the mapping belonging to a group comprising at least one of an equirectangular mapping, a cube mapping or a pyramid mapping, the indication being used in encoding of the video image.

5. The method of any of claims 1 to 2 or an apparatus according to any of claims 3 to 4, wherein the indication is encoded as:

   - a supplemental enhancement information message, or
   - a sequence-level header information, or
   - a image-level header information.

6. The method of any of claims 1 to 2 or 5 the apparatus according to any of claims 3 to 5 or, wherein the indication further comprises a second item representative of the orientation of the mapping surface in the 3D space.

7. The method of any of claims 1 to 2 or 5 to 6 or the apparatus according to any of claims 3 to 6, wherein the indication further comprises a third item representative of the density of the pixel mapped on the surface.

8. The method of any of claims 1 to 2 or 5 to 7 or the apparatus according to any of claims 3 to 7, wherein the indication further comprises a fourth item representative of the layout of the mapping surface into the image.

9. The method of any of claims 1 to 2 or 5 to 8 or the apparatus according to any of claims 3 to 8, wherein the indication further comprises a fifth item representative of a generic mapping comprising for each pixel of the video image to encode, spherical coordinates of the corresponding pixel into the omnidirectional video.

10. The method of any of claims 1 to 2 or 5 to 9 or the apparatus according to any of claims 3 to 9, wherein the indication further comprises a sixth item representative of a generic mapping comprising for each sampled pixel of a sphere into the omnidirectional video, 2D coordinates of the pixel on the video image.

11. The method of any of claims 1 to 2 or 5 to 10 or the apparatus according to any of claims 4 to 12, wherein the indication further comprises a seventh item representative of an intermediate sampling space, of a first generic mapping comprising for each sampled pixel of a sphere into the omnidirectional video, coordinates of the pixel in the intermediate sampling space; and of a second generic mapping comprising for each sampled pixel of in the intermediate sampling space, 2D coordinates of the pixel on the video image.

12. A video signal data comprising:

   - an encoded image of a video, the video being a 2D video into which an omnidirectional video is mapped; and
   - an encoded an indication of the mapping of the omnidirectional video into the 2D video, the indication comprising a first item representative of the type of surface used for the mapping belonging to a group comprising at least one of an equirectangular mapping, a cube mapping or a pyramid mapping, the indication being used in encoding of the video image.

13. A computer program product comprising program code instructions to execute the decoding method of any of claims 1 to 2 or 5 to 11, when this program is executed on a computer.

14. An immersive rendering device comprising an apparatus for decoding a bitstream representative of a large field of view video according to claim 3.

15. A system for immersive rendering of a large field of view video encoded into a bitstream, comprising at least:

   - a network interface (600) for receiving said bitstream from a data network,
   - an apparatus (700) for decoding said bitstream according to claim 3,
   - an immersive rendering device (900).

| Pre-Processing | → | Encoding | → | N/W I/R | ⌇ | N/W I/R | → | Decoding | → | Playing | → | Rendering |
|---|---|---|---|---|---|---|---|---|---|---|---|---|

300      400      500      600      700      800      900

FIG. 1

Internet

GW
50

computer
40

10

sensors
20

User inputs
30

FIG. 2

FIG. 3

FIG. 4

Internet

70

705

701 smartphone

User inputs

sensors

30

20

FIG. 5

Internet

80

sensors

User inputs

20

30

FIG.6

EP 3 301 933 A1

1000

Internet

5000

GW

4000

User inputs

3000

sensors

2000

FIG. 7

6000

5000

GW

Internet

User inputs

3000

sensors

2000

FIG. 8

EP 3 301 933 A1

FIG. 9

FIG. 10

EP 3 301 933 A1

EP 3 301 933 A1

70

Communication I/f — 702

Smartphone housing — 705

optics — 704

FIG. 11

80

display — 801

touchpad — 802

Communication I/f — 806

processing — 804

memory — 805

camera — 803

FIG. 12

FIG. 13

FIG. 14

FIG. 15

FIG. 16

Frame F to encode     2D Parametric surface     3D surface S     Local rendering frame G

FIG. 17

FIG. 18

EP 3 301 933 A1

**190**

FIG. 19

**200**

FIG. 20

**210**

FIG. 21

**220**

FIG. 22

EP 3 301 933 A1

FIG. 23

Europäisches
Patentamt

European
Patent Office

Office européen
des brevets

# EUROPEAN SEARCH REPORT

Application Number

EP 16 30 6265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BYEONGDOO CHOI ET AL: "Proposed Text for Omnidirectional Media Application Format", 114. MPEG MEETING; 22-2-2016 - 26-2-2016; SAN DIEGO; (MOTION PICTURE EXPERT GROUP OR ISO/IEC JTC1/SC29/WG11),, no. m37837, 20 February 2016 (2016-02-20), XP030066203, * abstract; figure 1; table 3 * * paragraphs [02.1], [03.2], [03.3], [03.4] * | 1-4,6,8, 9,11-15 | INV. H04N19/70 H04N19/46 G06T17/10 G06T15/00 |
| X | YE-KUI WANG ET AL: "Support of VR video in ISO base media file format", 114. MPEG MEETING; 22-2-2016 - 26-2-2016; SAN DIEGO; (MOTION PICTURE EXPERT GROUP OR ISO/IEC JTC1/SC29/WG11),, no. m37914, 18 February 2016 (2016-02-18), XP030066280, * abstract * * paragraphs [0001], [8.15.1], [8.15.5] * | 1-5, 12-15 | |
| X | "Descriptions of Core Experiments on DASH amendment", 115. MPEG MEETING;30-5-2016 - 3-3-2016; GENEVA; (MOTION PICTURE EXPERT GROUP OR ISO/IEC JTC1/SC29/WG11),, no. N16224, 3 June 2016 (2016-06-03), XP030022897, * paragraph [02.7] * | 1-4, 12-15 | TECHNICAL FIELDS SEARCHED (IPC) H04N G06T |
| X | EP 1 441 307 A1 (SONY CORP [JP]) 28 July 2004 (2004-07-28) * abstract; figures 5, 6 * * paragraphs [0010] - [0046], [0056] - [0066], [0086] - [0115], [0122] * | 1-4,7,9, 10,12-15 | |

-/--

The present search report has been drawn up for all claims

| Place of search | Date of completion of the search | Examiner |
|---|---|---|
| Munich | 13 December 2016 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 30 6265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 897 858 B1 (HASHIMOTO ROY T [US] ET AL) 24 May 2005 (2005-05-24) * the whole document * | 1-15 | |

TECHNICAL FIELDS
SEARCHED        (IPC)

The present search report has been drawn up for all claims

| Place of search | Date of completion of the search | Examiner |
|---|---|---|
| Munich | 13 December 2016 | Cakiroglu Garton, S |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 16 30 6265

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2016

| Patent document cited in search report | | Publication date | Patent family member(s) | | Publication date |
|---|---|---|---|---|---|
| EP 1441307 | A1 | 28-07-2004 | CN | 1491403 A | 21-04-2004 |
| | | | EP | 1441307 A1 | 28-07-2004 |
| | | | JP | 2003141562 A | 16-05-2003 |
| | | | KR | 20040050888 A | 17-06-2004 |
| | | | US | 2004247173 A1 | 09-12-2004 |
| | | | WO | 03038752 A1 | 08-05-2003 |
| US 6897858 | B1 | 24-05-2005 | NONE | | |

For more details about this annex : see Official Journal of the European Patent Office, No. 12/82

EPO FORM P0459

36